# EUROPÄISCHE PATENTSCHRIFT

(11) **EP 1 747 427 B1**
(45) Veröffentlichungstag und Bekanntmachung des Hinweises auf die Patenterteilung: **31.07.2013**
(21) Anmeldenummer: 05741814.7
(22) Anmeldetag: 09.05.2005
(51) Int. Cl.: G01D 3/032

(54) **VERFAHREN UND VORRICHTUNG ZUR ERFASSUNG EINER VERÄNDERLICHEN GRÖSSE EINES FAHRZEUGS**
METHOD AND DEVICE FOR DETECTING A VARIABLE OF A VEHICLE
PROCEDE ET DISPOSITIF POUR ACQUERIR UNE GRANDEUR VARIABLE D'UN VEHICULE

(30) Priorität: 11.05.2004 DE 102004023256
(43) Veröffentlichungstag der Anmeldung: 31.01.2007
(73) Patentinhaber: KNORR-BREMSE Systeme für Nutzfahrzeuge GmbH, 80809 München (DE)
(72) Erfinder: WÖRNER, Dieter, 75031 Kleingartach (DE)
(74) Vertreter: Schönmann, Kurt
(86) Internationale Anmeldenummer: PCT/EP2005/004981
(87) Internationale Veröffentlichungsnummer: WO 2005/111545

(56) Entgegenhaltungen:
- EP-A1- 1 302 753
- DE-A1- 4 235 263
- US-A- 5 517 112
- US-A1- 2003 042 893

## Beschreibung

### Stand der Technik

Die Erfindung geht aus von einem Verfahren zur Erfassung einer veränderlichen Größe eines Fahrzeugs, insbesondere eines Nutzfahrzeugs gemäß dem Oberbegriff von Anspruch 1 sowie von einer Vorrichtung zur Ausführung des Verfahrens nach dem Oberbegriff von Anspruch 2.

Moderne Fahrzeuge besitzen eine Vielzahl mechatronischer Systeme, bei welchen mechanische, elektronische und datenverarbeitende Komponenten miteinander verknüpft sind. Mechatronische Systeme spielen in Form von regelungstechnischen Strukturen in Fahrzeugen eine große Rolle. Beispiele sind das Motormanagement für Brennkraftmaschinen, Anti-Blockiersysteme, Antriebsschlupfregelungen, Elektronische Stabilitätssysteme etc.. Sie beinhalten in der Regel eine gattungsgemäße Messeinrichtung, wie sie beispielsweise in der DE 42 35 880 A1 beschrieben ist, mit welcher Sensorsignale wenigstens eines Sensorelements auswertbar sind sowie wenigstens ein Stellelement mit elektrischer Ansteuerung.

Falls das Stellelement in unmittelbarer Nähe des Sensorelements angeordnet ist, ergibt sich das Problem, dass die von dem Sensorelement erzeugten Sensorsignale durch elektrische und/oder magnetische Felder, die insbesondere bei einer Änderung der elektrischen Ansteuerung des Stellelements entstehen, beeinflusst werden und folglich Messfehler entstehen.

Zur Lösung dieses Problems wird beim Stand der Technik vorgeschlagen, das Sensorelement durch eine Abschirmung vor Störeinflüssen des Stellelements zu schützen, mit dem Nachteil der dadurch entstehenden Kosten.

Weiterhin ist bekannt, dass das Sensorelement nur dann Sensorsignale liefert bzw. nur dann aktiviert wird, wenn keine Änderung der elektrischen Ansteuerung des Stellelements erfolgt. Hierzu müssen allerdings die Funktionen des Sensorelements und des Stellelements synchronisiert werden, was einen gewissen Aufwand erfordert.

Außerdem könnten die Störeinflüsse der elektrischen Ansteuerung des Stellelements rechnerisch kompensiert werden. Hierzu muss jedoch das Störverhalten bekannt sein, was je nach Anwendung einen erheblichen Rechenaufwand erfordern kann.

Schließlich offenbart die US 2003/0042893 A1 ein Messverfahren für eine mechatronische Einrichtung, welche ein elektromagnetisch betätigtes Stellelement und einen Sensor umfasst, wobei zur Reduzierung von Interferenzen zwischen dem elektromagnetisch betätigten Stellelement und dem Sensor die Messzeiten des Sensors auf ein Zeitfenster begrenzt werden, während dem das elektromagnetisch betätigte Stellelement nicht bestromt wird. Falls der Sensor und das Stellelement in einem gemeinsamen Regelkreis integriert sind, was üblicherweise der Fall ist, ist dann jedoch die Regeldynamik gering, weil parallele Funktionen von Sensor und Stellelement nicht möglich sind.

Der vorliegenden Erfindung liegt demgegenüber die Aufgabe zugrunde, ein Verfahren und eine Vorrichtung zur Erfassung einer veränderlichen Größe eines Fahrzeugs der eingangs erwähnten Art derart weiter zu entwickeln. dass im Rahmen einer regelungstechnischen Struktur eine möglichst hohe Regeldynamik möglich ist.

Diese Aufgabe wird durch die kennzeichnenden Merkmalen der Ansprüche 1 und 2 gelöst.

### Offenbarung der Erfindung

Die Erfindung basiert auf dem Gedanken, dass während eines Beeinflussungszeitraums zwischen einem Zeitpunkt einer Änderung der elektrischen Ansteuerung des Stellelements und einem Zeitpunkt, in welchem diese Änderung im wesentlichen gerade noch einen Einfluss auf die Messwerte ausübt, die Gefahr von Messungenauigkeiten besteht. Der Beeinflussungszeitraum endet in der Regel, wenn sich das Stellelement auf den infolge der elektrischen Ansteuerung hervorgerufenen neuen Zustand eingeschwungen hat.

Gemäß der Erfindung findet eine Auswertung der innerhalb des Beeinflussungszeitraums gewonnenen Messwerte nur dann statt, wenn die Genauigkeit der Messwerte eine bestimmte, in einem Speicher einer Auswerteeinrichtung abgelegte Grenze überschreitet.

In diesem Fall kann auf eine aufwändige Synchronisation der Funktionen des Sensorelements und des Stellelements verzichtet werden. Es muss lediglich überwacht werden, ob sich die elektrische Ansteuerung des Stellelements während der Messung ändert.

Die Erfindung betrifft außerdem eine Vorrichtung zur Erfassung einer veränderlichen Größe eines Fahrzeugs gemäß Anspruch 2.

Die Erfindung betrifft schließlich auch Fahrzeuge, insbesondere Nutzfahrzeuge, welche mit einer solchen Vorrichtung ausgerüstet sind.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: eine schematische Darstellung einer Vorrichtung zur Erfassung einer veränderlichen Größe eines Fahrzeugs gemäß einer bevorzugten Ausführungsform der Erfindung,
- Fig.2: eine schematische Darstellung einer Vorrichtung zur Erfassung einer veränderlichen Größe eines Fahrzeugs gemäß einer weiteren Ausführungsform der Erfindung.

### Beschreibung der Ausführungsbeispiele

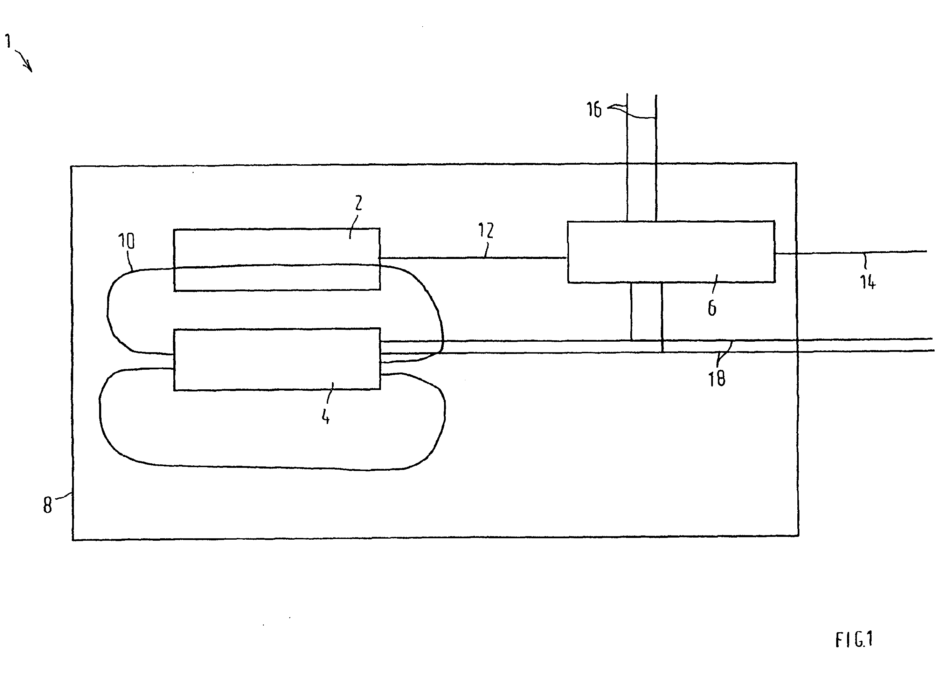

Die in Fig.1 insgesamt mit 1 bezeichnete Vorrichtung zur Erfassung einer veränderlichen Größe eines Fahrzeugs beinhaltet ein Sensorelement 2, einen elektrisch ansteuerbaren Aktuator als Stellelement 4 sowie eine elektronische Auswerteeinrichtung 6, wobei diese Komponenten vorzugsweise in einem gemeinsamen Gehäuse 8 angeordnet sind. Insbesondere ist das Sensorelement 2 in unmittelbarer Nachbarschaft zum Stellelement 4 angeordnet, so dass sich das bei einer Änderung der Ansteuerung des Stellelements 4 entstehende elektrische oder magnetische Feld teilweise auf das Sensorelement 2 erstreckt, wie durch die Feldlinien 10 in Fig.1 angedeutet ist.

Das Sensorelement 2 liefert über eine Signalleitung 12 der elektronischen Auswerteeinrichtung Messwerte als Sensorsignale, in deren Abhängigkeit die elektronische Auswerteeinrichtung 6 über eine externe Signalleitung 14 wiederum Ausgangssignale erzeugt. Weiterhin wird die Auswerteeinrichtung 6 durch Leistungskabel 16 von außen mit Spannung versorgt. Das Stellelement 4 wird beispielsweise von einer weiteren, aus Maßstabsgründen nicht gezeigten Einheit über Steuerleitungen 18 angesteuert, welche in die Auswerteeinrichtung abzweigen.

Die Vorrichtung 1 zur Erfassung einer veränderlichen Größe ist beispielsweise Bestandteil eines Kupplungsstellers einer Reibungskupplung eines Nutzfahrzeugs. In diesem Fall ist das Sensorelement beispielsweise ein Wegsensor 2, der den Ausrückweg der Reibungskupplung misst. Das Stellelement beinhaltet dann ein elektrisch ansteuerbares Magnetventil 4.

Vor diesem Hintergrund ist die Funktionsweise der Vorrichtung 1 wie folgt:

Das Sensorelement 2 liefert bei einer Änderung der zu erfassenden Größe, beispielsweise des Ausrückwegs der Reibungskupplung ständig Messwerte. Die Auswerteeinrichtung 6 liest über die Signalleitung 12 die Messwerte in einen Speicher ein. Wird nun das Stellelement 4 von außen über die Steuerleitungen 18 angesteuert, was einer Änderung seiner Ansteuerung entspricht, so erhält auch die Auswerteeinrichtung 6 über die Steuerleitungen 18 ein entsprechendes Signal, welchem sie einen Zeitpunkt des Beginns der Änderung der Ansteuerung des Stellelements 4 zuordnet. In einem gespeicherten Kennfeld der Auswerteeinrichtung 6 ist ein Erfahrungswert für einen Beeinflussungszeitraum zwischen dem Zeitpunkt der Änderung der elektrischen Ansteuerung des Stellelements 4 und einem Zeitpunkt abgelegt, in welchem diese Änderung im wesentlichen gerade noch einen Einfluss auf die vom Sensorelement 2 gelieferten Messwerte ausübt. Dieser Beeinflussungszeitraum ist in der Regel beendet, wenn sich der elektrische Zustand des Stellelements 4 auf das neue Niveau eingeschwungen hat.

Erfindungsgemäß ist die Auswerteeinrichtung 6 derart ausgebildet, dass während des Beeinflussungszeitraums keine Auswertung der Messwerte stattfindet. Genauer wird ein einem Messzeitpunkt zugeordneter Messwert in den Speicher der Auswerteeinrichtung 6 eingelesen und falls dieser Messzeitpunkt innerhalb des Beeinflussungszeitraums liegt, wird er verworfen und andernfalls ausgewertet oder verarbeitet.

Falls bei einer Anwendung Messungen über einen längeren Zeitraum notwendig sind und währenddessen eine Änderung der elektrischen Ansteuerung des Stellelements 4 stattfindet, kann die Auswertung der Messwerte auch abgebrochen und wieder von vorne gestartet werden, wenn der Beeinflussungszeitraum abgelaufen ist. Vorzugsweise wird eine Messung bei einer Änderung der elektrischen Ansteuerung des Stellelements sofort oder während oder nach Beendigung des Beeinflussungszeitraums abgebrochen und nach Beendigung des Beeinflussungszeitraums neu gestartet.

Alternativ findet während des Beeinflussungszeitraums eine Auswertung der Messwerte nur dann statt, wenn die Genauigkeit der Messwerte eine bestimmte Grenze überschreitet. Diese Grenze kann ebenfalls im Speicher der Auswerteeinrichtung 6 abgelegt sein.

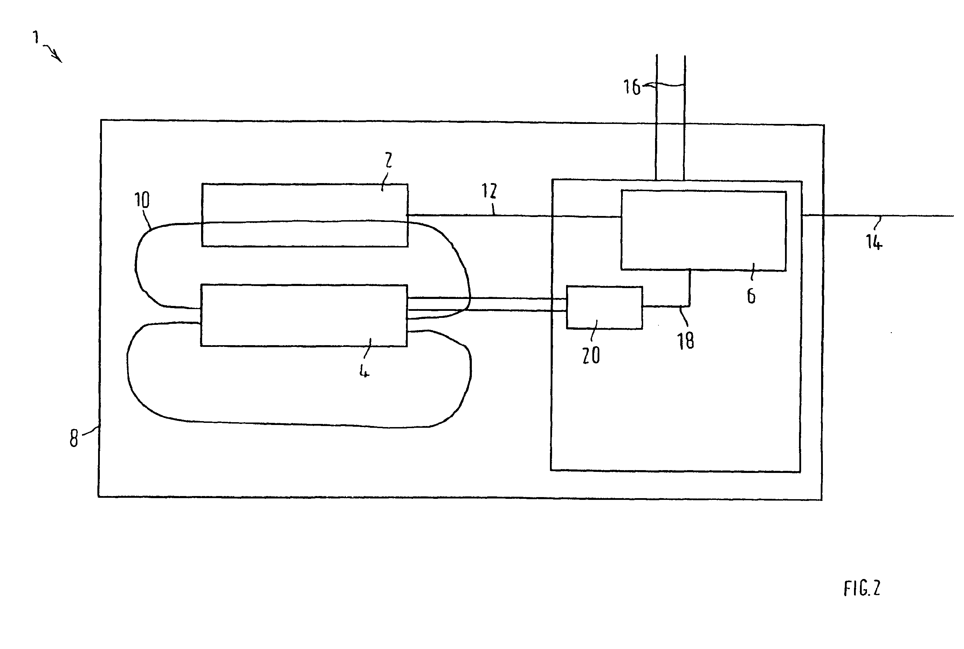

Bei dem zweiten Ausführungsbeispiel der Erfindung nach der Fig.2 sind die gegenüber dem vorhergehenden Beispiel gleichbleibenden und gleichwirkenden Teile durch die gleichen Bezugszeichen gekennzeichnet. Im Unterschied zu Fig.1 sind in die elektronische Auswerteeinrichtung 6 gleichzeitig die Steuerfunktionen für das Stellelement 4 integriert, weshalb sie auch ein Steuergerät für jenes bildet. Die Steuerleitungen 18 erstrecken sich folglich nicht in den Bereich außerhalb des Gehäuses 8, sondern lediglich zwischen der Auswerteeinrichtung 6 und dem Stellelement 4, wo auch eine Endstufe 20 angeordnet ist. Die Funktionsweise dieses Ausführungsbeispiels ist wie beim vorangehenden Ausführungsbeispiel beschrieben.

### Bezugszeichenliste

- 1: Vorrichtung
- 2: Sensorelement
- 4: Stellelement
- 6: Auswerteeinrichtung
- 8: Gehäuse
- 10: Feldlinien
- 12: Signalleitung
- 14: Signalleitung
- 16: Leistungskabel
- 18: Steuerleitung
- 20: Endstufe

## Patentansprüche

1. Verfahren zur Erfassung einer veränderlichen Größe eines Fahrzeugs mit Hilfe einer Messeinrichtung (2, 6), mit welcher Messwerte als Sensorsignale wenigstens eines Sensorelements (2) ausgewertet werden, das in unmittelbarer Nähe zu einem Stellelement (4) mit elektrischer Ansteuerung angeordnet ist, bei dem während eines Beeinflussungszeitraums zwischen einem Zeitpunkt einer Änderung der elektrischen Ansteuerung des Stellelements (4) und einem Zeitpunkt, in welchem diese Änderung im wesentlichen gerade noch einen Einfluss auf die Messwerte ausübt, **dadurch gekennzeichnet, dass** eine Auswertung der Messwerte nur dann stattfindet, wenn die Genauigkeit der Messwerte eine bestimmte, in einem Speicher einer Auswerteeinrichtung (6) abgelegte Grenze überschreitet.

2. Vorrichtung (1) zur Erfassung einer veränderlichen Größe eines Fahrzeugs, insbesondere eines Nutzfahrzeugs, beinhaltend eine Messeinrichtung (2, 6), mit welcher Messwerte als Sensorsignale wenigstens eines Sensorelements (2) auswertbar sind, sowie wenigstens ein Stellelement (4) mit elektrischer Ansteuerung in unmittelbarer Nähe des Sensorelements (2), bei dem die Messeinrichtung (2, 6) derart ausgebildet ist, dass während eines Beeinflussungszeitraums zwischen einem Zeitpunkt einer Änderung der elektrischen Ansteuerung des Stellelements (4) und einem Zeitpunkt, in welchem diese Änderung im wesentlichen gerade noch einen Einfluss auf die Sensorsignale ausübt, **dadurch gekennzeichnet, dass** eine Auswertung der Messwerte nur dann stattfindet, wenn die Genauigkeit der Messwerte eine bestimmte, in einem Speicher einer Auswerteeinrichtung (6) abgelegte Grenze überschreitet.

3. Fahrzeug, insbesondere Nutzfahrzeug mit einer Vorrichtung (1) nach Anspruch 2.

## Claims

1. Method of detecting a variable of a vehicle, using a measuring means (2, 6) serving to evaluate measured values as sensor signals of at least one sensor element (2) that is disposed in the immediate vicinity of an actuator element (4) with electrical control, wherein evaluation takes place during an influencing interval between a point of time of a variation of the electrical control of said actuator element (4) and a point of time by which this variation substantially just exerts still an influence on the measured values, **characterized in that** evaluation of the measured values takes place only when the precision of the measured values exceeds a defined limit stored in a memory of an evaluation means (6).

2. Device (1) for detection of a variable of a vehicle, in particular a commercial vehicle, including a measuring means (2, 6) adapted to evaluate measured values as sensor signals of at least one sensor element (2), as well as at least one actuator element (4) with electrical control in the immediate vicinity of said sensor element (2), wherein said measuring means (2, 6) is so configured that evaluation takes place during an influencing interval between a point of time of a variation of the electrical control of said actuator element (4) and a point of time by which this variation substantially just exerts still an influence on the sensor signals, **characterized in that** evaluation of the measured values takes place only when the precision of the measured values exceeds a defined limit stored in a memory of an evaluation means (6).

3. Vehicle, in particular a commercial vehicle, including a device (1) according to Claim 2.

## Revendications

1. Procédé à détecter un paramètre d'un véhicule moyennant un moyen de mesure (2, 6) servant à évaluer des valeurs mesurées en tant que signaux de détection d'au moins un seul élément détecteur (2), qui est disposé au voisinage immédiat d'un élément actionneur (4) à commande électrique, dans lequel l'évaluation se déroule au cours d'un intervalle d'influence entre un point de temps d'une variation de la commande électrique dudit élément actionneur (4) et un point de temps, auquel cette variation essentiellement prend juste encore de l'influence sur les valeurs mesurées, **caractérisé en ce que** l'évaluation des valeurs mesurées ne se fait que quand la précision des valeurs mesurées dépasse un seuil défini mémorisé dans une mémoire d'un moyen d'évaluation (6).

2. Dispositif(1) à détecter un paramètre d'un véhicule, en particulier d'un véhicule utilitaire, comprenant un moyen de mesure (2, 6) apte à évaluer des valeurs mesurées en tant que signaux de détection d'au moins un seul élément détecteur (2), ainsi qu'au moins un élément actionneur (4) à commande électrique au voisinage immédiat dudit élément détecteur (2), dans lequel ledit moyen de mesure (2, 6) est configuré d'une telle façon, que l'évaluation se déroule au cours d'un intervalle d'influence entre un point de temps d'une variation de la commande électrique dudit élément actionneur (4) et un point de temps, auquel cette variation essentiellement prend juste encore de l'influence sur les valeurs mesurées, **caractérisé en ce que** l'évaluation des valeurs mesurées ne se fait que quand la précision des valeurs mesurées dépasse un seuil défini mémorisé dans une mémoire d'un moyen d'évaluation (6).

3. Véhicule, en particulier un véhicule utilitaire, comprenant un dispositif (1) selon la revendication 2.
